# EUROPEAN PATENT APPLICATION

(11) **EP 2 423 722 A1**
(43) Date of publication of application: **29.02.2012**
(21) Application number: 10008830.1
(22) Date of filing: 25.08.2010
(51) Int. Cl.: G02B 6/38

(54) **Fiber optic adapter with permanently fixed fiber optic ferrule on the first side thereof**

(71) Applicant: CCS Technology, Inc., Wilmington, DE 19803 (US)
(72) Inventor: Schweiker, Wolfgang, 83629 Weyarn (DE)
(74) Representative: Sturm, Christoph

(57) **Abstract**

A fiber optic adapter (10), comprising a ferrule guide (12) being positioned with an adapter body (11), whereby a first fiber optic ferrule (13) terminating at least one optical fiber is permanently fixed in the ferrule guide (12) from a first side (15) of the ferrule guide (12), and whereby a second fiber optic ferrule being part of a fiber optic connector terminating at least one optical fiber is pluggable into said ferrule guide (12) from an opposite second side (16) of the ferrule guide (12). (Figure 1)

## Description

The invention relates to a fiber optic adapter and to a method for manufacturing the same.

Fiber optic adapters known from practical use comprise an adapter body providing on two opposite sides of the adapter body a receptacle. Each receptacle receives a fiber optic connector by plugging the fiber optic connector in the respective receptacle. Each fiber optic connector comprises a fiber optic ferrule terminating at least one optical fiber thereby providing fiber optic connection points of the respective fiber optic adapter. When two fiber optic connectors are plugged into the two receptacles, the fiber optic ferrules of the same are mated thereby providing a fiber optic connection between the fiber optic connection points of the fiber optic ferrules.

Known fiber optic adapters need a relative large space when the same are used in fiber optic modules like racks, furcation modules or cabinets. Due to space limitations and/or improved airflow requirements in fiber optic modules the requirements for size reduction of fiber optic adapters are increasing continuously. Specifically in data centers space is very tight and the heat dissipated by active electronics requires free airflow. Minimizing the size of fiber optic adapters significantly helps to improve the situation.

Against this background, a novel fiber optic adapter is provided. The novel fiber optic adapter comprises a ferrule guide being positioned within an adapter body, whereby a first fiber optic ferrule terminating at least one optical fiber is permanently fixed in the ferrule guide from a first side of the ferrule guide, and whereby a second fiber optic ferrule being part of a fiber optic connector terminating at least one optical fiber is pluggable into said ferrule guide from an opposite second side of the ferrule guide.

The novel fiber optic adapter has a significantly reduced size. The novel fiber optic adapter provides on one side a pre-stubbed fiber optic adapter. When the novel fiber optic adapter is used within a fiber optic module, the side providing the pre-stubbed fiber optic adapter is positioned inside the fiber optic module. By using bend insensitive fibers inside a fiber optic module the minimum distance between a plate or a wall of the fiber optic module carrying the novel fiber optic adapter module and any other part inside the fiber optic module module can be reduced to approximately 15 mm. Using fiber optic adapters known from practical use said distance needs to be approximately 50 mm. The main advantage of the novel fiber optic adapter is size reduction, especially size reduction of fiber optic modules comprising the fiber optic adapter. Additionally, costs can be saved since only a bare ferrule is used on one side of the fiber optic adapter.

According to a preferred embodiment of the novel fiber optic adapter, the first fiber optic ferrule comprises a protrusion in which the or each optical fiber is terminated by said first fiber optic ferrule and/or the ferrule guide has a longitudinal slot extending in longitudinal direction of the ferrule guide and having a circumferential width between 45° and 120°. This allows easy cleaning of the first fiber optic ferrule being permanently fixed in the ferrule guide.

According to a preferred embodiment of the novel fiber optic adapter, the first fiber optic ferrule is permanently fixed in the ferrule guide by gluing, whereby an adhesive is used for gluing said first fiber optic ferrule in the ferrule guide. Said adhesive which is used to glue the first fiber optic ferrule in the ferrule guide or a different adhesive being softer preferably provides an adhesive dome at one end of the fiber optic ferrule thereby protecting the or each optical fiber being terminated by the first fiber optic ferrule. This allows easy protection of the optical fibers being terminated by said first fiber optic ferrule.

The method for manufacturing the fiber optic adapter comprises at least the following steps: providing the ferrule guide and the adapter body; providing the first fiber optic ferrule terminating at least one optical fiber; fixing the first fiber optic ferrule permanently in the ferrule guide from the first side of the ferrule guide.

Preferred developments of the invention are provided by the dependent claims and the description which follows. Exemplary embodiments are explained in more detail on the basis of the drawing, in which:
- Figure 1: shows schematically a fiber optic adapter according to a preferred embodiment of to the invention;
- Figure 2: shows schematically a detail of the fiber optic adapter of Figure 1;
- Figure 3: shows a cross section through the detail of Figure 2;
- Figure 4: shows schematically another detail of the fiber optic adapter of Figure 1; and
- Figure 5: shows schematically another detail of the fiber optic adapter.
The application relates to a fiber optic adapter and to a method for manufacturing the same.

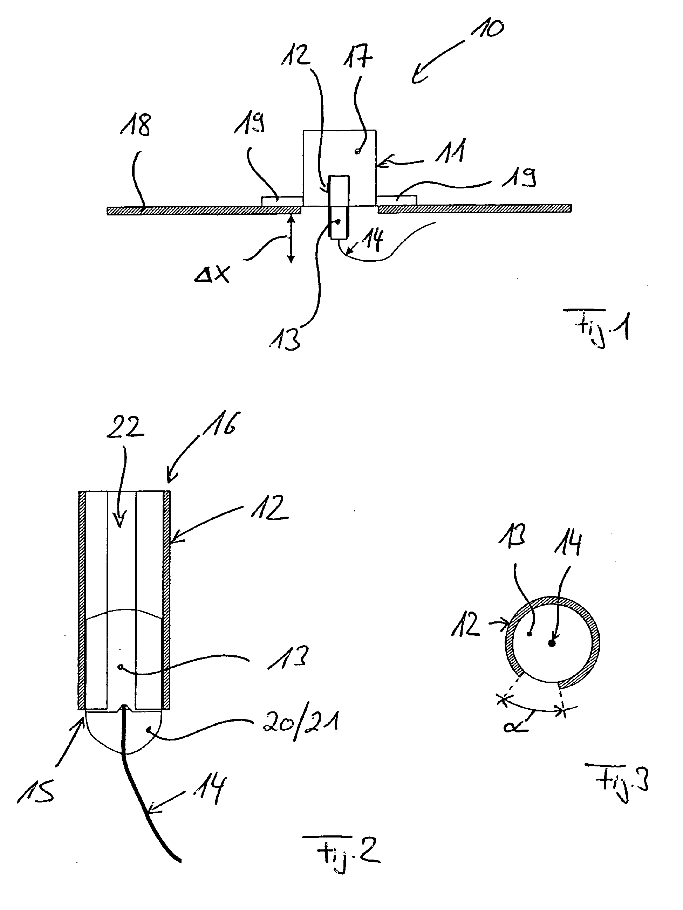

Figures 1, 2 and 3 show a fiber optic adapter 10 according to a preferred embodiment of the present invention. Said fiber optic adapter 10 comprises an adapter body 11 and a ferrule guide 12 being positioned with the adapter body 11.

A first fiber optic ferrule 13 terminating at least one optical fiber 14 is permanently fixed in the ferrule guide 12, namely in a first side 15 or first section of the ferrule guide 12. A second fiber optic ferrule (not shown) being part of a fiber optic connector (not shown) terminating at least one optical fiber is pluggable into a second section of said ferrule guide 12 from an opposite second side 16 of the ferrule guide 12.

The first fiber optic ferrule 13 being permanently fixed in the ferrule guide 12 terminates at least one optical fiber 14 and thereby provides at least one fiber optic connection point. The second fiber optic ferrule being part of a fiber optic connector and being pluggable into said ferrule guide 12 also terminates at least one optical fiber and thereby provides at least fiber optic connection point.

When the second fiber optic ferrule is plugged into said ferrule guide 12 from the second side of the same, both fiber optic ferrules are mated thereby providing an optical connection between the fiber optic connection points of the same.

The adapter body 11 provides a receptacle 17 for a fiber optic connector on only one side of the adapter body 11, whereby the second side 16 of the ferrule guide 12 extends into said receptacle 17. On the other side of the adapter body 11 the same does not provide a receptacle. At this side the bare first ferrule 13 is permanently fixed in the ferrule guide 12.

Bend insensitive optical fibers 14 like fibers sold by Corning Cable Systems LLC under the trademark "ClearCurve" are preferably terminated by said first fiber optic ferrule 13.

When the fiber optic adapter is mounted to a wall or plate 18 of a fiber optic module, the bare first fiber optic ferrule 13 is positioned inside the fiber optic module and a minimum distance Δx between the wall or plate 18 of the fiber optic module carrying the fiber optic adapter adapter 10 and any other part (not shown) inside the fiber optic module module can be reduced to approximately 15 mm.

The adapter body 11 comprises protrusions 19 for mounting the adapter 10 to the wall or plate 18 of a fiber optic module.

The first fiber optic ferrule 13 is permanently fixed in the ferrule guide 12 preferably by gluing. An adhesive 20 is used for gluing said first fiber optic ferrule 13 in the ferrule guide 12, whereby said adhesive preferably provides an adhesive dome 21 at one end of the fiber optic ferrule 13 thereby protecting the or each optical fiber 14 being terminated by the first fiber optic ferrule 13. The or each optical fiber 14 is thereby protected against breaking at said end of the first fiber optic ferrule13, namely at an end of the fiber optic ferrule13 into which the or each fiber 14 is inserted into the ferrule 13 opposite to the end of the fiber optic ferrule13 at which the or each fiber 14 is terminated by the ferrule 13.

Preferably two different adhesives having a different hardness or softness are used, namely a first relative hard adhesive for gluing said first fiber optic ferrule 13 in the ferrule guide 12 and second relative soft adhesive for providing said adhesive dome.

The adhesive dome 21 for fiber protection can also be applied during production of the first fiber optic ferrule 13, i.e. before the first fiber optic ferrule 13 is glued into the ferrule guide 12.

The adhesive dome 21 provides protection against fiber breaking. The softness of the adhesive 20 used to provide the adhesive dome 21 should be such that it is soft enough to avoid breaking of the or each fiber 14 at the end of the dome 21, but hard enough to protect the or each fiber 14 at the interface to the first fiber optic ferrule 13.

The ferrule guide 12 is preferably provided by a sleeve having a longitudinal slot 22 extending in longitudinal direction of the sleeve 12. The sleeve 12 is preferably elastic so that the same can provide a crimping force of the ferrules. The slot 22 of said sleeve 12 preferably has a circumferential width a between 45° and 120° (see Figure 3). This allows easy cleaning of the first fiber optic ferrule 13 being permanently fixed in the ferrule guide 12.

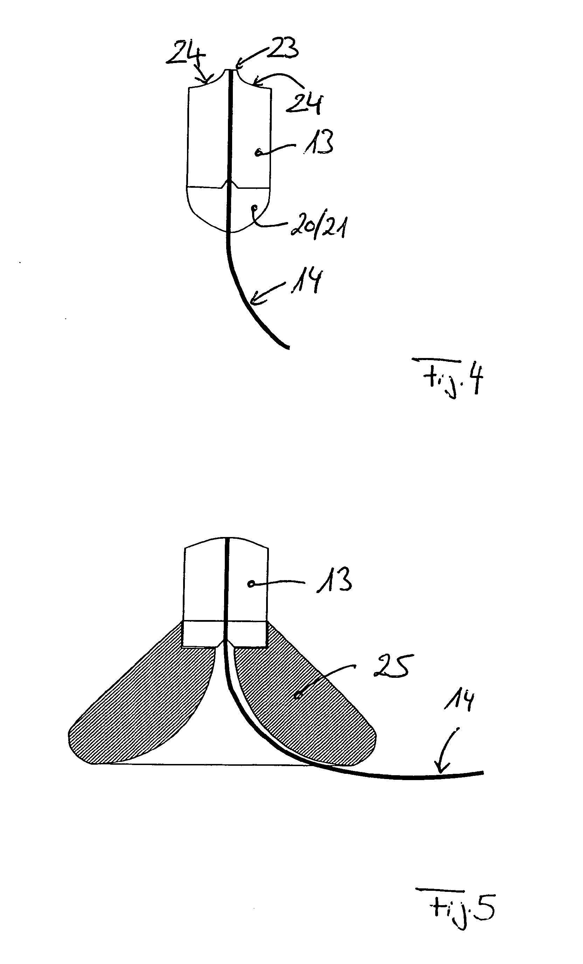

In order to further improve the easy cleaning of the first fiber optic ferrule 13 being permanently fixed in the ferrule guide 12, the first fiber optic ferrule 13 may comprise a protrusion 23 (see Figure 4) in which the or each optical fiber 14 is terminated by said first fiber optic ferrule 13. The first fiber optic ferrule 13 is shaped concave adjacent said protrusion 23. Within said concave shaped sections 24 of the first fiber optic ferrule 13 dirt and/or debris can be collected outside the region of the protrusion 23 in which the or each optical fiber 14 is terminated, whereby said dirt and/or debris can be easily removed from the adapter 10 through the slot 22 of the ferrule guide 12.

It is also possible that the first fiber optic ferrule 13 is permanently fixed in the ferrule guide 12 by crimping.

According to another embodiment of the present invention a fiber guide 25 (see Figure 5) is attached to the first fiber optic ferrule 13 or to the ferrule guide 12 thereby protecting the or each optical fiber 14 being terminated by the first fiber optic ferrule 13 against breaking and guaranteeing a minimum bend radius of the or each optical fiber 14. Such a fiber guide 25 can be used in addition to the adhesive dome 21 when the first fiber optic ferrule 13 is permanently fixed in the ferrule guide 12 by gluing.

It is also possible that the first fiber optic ferrule 13 is permanently fixed in the ferrule guide 12 both by crimping and gluing.

This present application describes a fiber optic adapter 10, that has a regular connector interface, namely a receptacle 17, on one side of the adapter 10 and a ferrule 13 inserted into the fiber optic adapter 10 permanently on the other side of the adapter 10. The permanently inserted ferrule 13 allows for a significantly reduced size of the fiber optic adapter 10 on one side leading to the possibility of significant size reduction of any fiber optic module using such a fiber optic adapter 10.

The longitudinal position of the first ferrule 13 being permanently fixed in the fiber optic adapter 10, namely in the ferrule guide 12 of the same, has to be such that the mating ferrule (not shown) of a fiber optic connector (not shown) plugged into the other end of the fiber optic adapter 10 is sufficiently pressed to the fixed ferrule 13. This could be done e.g. by a precisely defined length of the ferrule 13. The ferrule 13 would then e.g. have to be aligned to the end of the ferrule guide 12.

The or each fiber 14 terminated by the first ferrule 13 can be a single mode or a multi mode fiber.

The or each optical fiber 14 might be uncoated. Inside the first fber optic ferrule 13 the or each optical fiber 14 is uncoated. This uncoated area of the or each optical fiber 14 can slightly extend into the adhesive dome 21 and is thereby protected. Outside of any protection by the first fber optic ferrule 13 and preferably the adhesive dome 21 the or each optical fiber 14 is preferably coated.

The fiber optic adapter 10 can be designed as a single fiber adapter, like a SC adapter, LC adapter or FC adapter. The fiber optic adapter 10 can also be designed as a multi fiber adapter for a plurality of fibers, like a MTP adapter.

The fiber optic adapter 10 can comprise PC (physical contact) and APC (angled physical contact) ferrules. In the latter case the angled end face of the ferrule 13 has to be oriented so that it fits the mating ferrule of a fiber optic connector. Ferrule end face can be polished or laser cleaved.

The method for manufacturing the fiber optic adapter comprises the following steps: providing the ferrule guide 12 and the adapter body 11; providing the first fiber optic ferrule 13 terminating at least one optical fiber; fixing the first fiber optic ferrule 13 permanently in the ferrule guide 12 from the first side of the ferrule guide 12.

As mentioned above, the step of fixing the first fiber optic ferrule 13 permanently in the ferrule guide 12 is preferably performed by gluing using an adhesive. Within this fixing step it is possible to provide the adhesive dome 21 using the same adhesive or an adhesive being softer than the adhesive used for gluing the first fiber optic ferrule 13 in the ferrule guide 12.

Alternatively, the adhesive dome 21 for fiber protection can also be applied during production of the first fiber optic ferrule 13 before the first fiber optic ferrule 13 is glued into the ferrule guide 12.

The protrusion 23 of the first fiber optic ferrule 13 is provided during production of the first fiber optic ferrule 13 before the first fiber optic ferrule 13 is glued into the ferrule guide 12.

The slot 22 of the ferrule guide 12 is provided during production of the ferrule guide 12 before the first fiber optic ferrule 13 is glued into the ferrule guide 12.

The step of fixing the first fiber optic ferrule 13 permanently in the ferrule guide 12 can be performed when the ferrule guide 12 is positioned within the adapter body 11. Alternatively, the ferrule guide 12 becomes positioned within the adapter body 11 after this fixing step.

List of reference signs
- 10: fiber optic adapter
- 11: adapter body
- 12: ferrule guide
- 13: first fiber optic ferrule
- 14: optical fiber
- 15: first end
- 16: second end
- 17: receptacle
- 18: wall/plate
- 19: protrusion
- 20: adhesive
- 21: adhesive dome
- 22: slot
- 23: protrusion
- 24: concave shaped section
- 25: fiber guide

## Claims

1. A fiber optic adapter, comprising a ferrule guide (12) being positioned with an adapter body (11), whereby a first fiber optic ferrule (13) terminating at least one optical fiber is permanently fixed in the ferrule guide (12) from a first side (15) of the ferrule guide (12), and whereby a second fiber optic ferrule being part of a fiber optic connector terminating at least one optical fiber is pluggable into said ferrule guide (12) from an opposite second side (16) of the ferrule guide (12).

2. The fiber optic adapter as claimed in claim 1, wherein the adapter body (11) provides a receptacle (17) on only one side of the adapter body (11) for receiving a fiber optic connector, whereby the second side (16) of the ferrule guide (12) extends into said receptacle (17).

3. The fiber optic adapter as claimed in claim 1 or 2, wherein the first fiber optic ferrule (13) is a bare ferrule being permanently fixed in the ferrule guide (12) by gluing.

4. The fiber optic adapter as claimed in claim 3, wherein an adhesive (20) is used for gluing said first fiber optic ferrule (13) in the ferrule guide (12), said adhesive providing an adhesive dome (21) at one end of the fiber optic ferrule (13) thereby protecting the or each optical fiber (14) being terminated by the first fiber optic ferrule (13).

5. The fiber optic adapter as claimed in claim 3, wherein a first, relative hard adhesive (20) is used for gluing said first fiber optic ferrule (13) in the ferrule guide (12), and wherein a second, relative soft adhesive is used for providing an adhesive dome (21) at one end of the fiber optic ferrule (13) thereby protecting the or each optical fiber (14) being terminated by the first fiber optic ferrule (13).

6. The fiber optic adapter as claimed in one of claims 1 to 5, wherein the first fiber optic ferrule (13) is a bare ferrule being permanently fixed in the ferrule guide (12) by crimping.

7. The fiber optic adapter as claimed in one of claims 1 to 6, wherein a fiber guide (25) is attached to the first fiber optic ferrule (13) or to the ferrule guide (12) thereby protecting the or each optical fiber (14) being terminated by the first fiber optic ferrule (13).

8. The fiber optic adapter as claimed in one of claims 1 to 7, wherein the ferrule guide (12) is provided by a sleeve having a longitudinal slot (22) extending in longitudinal direction of the sleeve.

9. The fiber optic adapter as claimed in claim 8, wherein the sleeve (12) is elastic.

10. The fiber optic adapter as claimed in claim 8 or 9, wherein the slot (22) has a circumferential width (α) between 45° and 120°.

11. The fiber optic adapter as claimed in one of claims 1 to 10, wherein the first fiber optic ferrule (13) comprises a protrusion (23) in which the or each optical fiber is terminated by said first fiber optic ferrule (13).

12. The fiber optic adapter as claimed in claim 11, wherein the first fiber optic ferrule (13) comprises at least one concave shaped section (24) adjacent said protrusion (23).

13. The fiber optic adapter as claimed in one of claims 1 to 12, wherein said adapter body (11) comprises protrusions (19) for mounting the fiber optic adapter to a wall or a plate (18) of a fiber optic module.

14. A method for manufacturing a fiber optic adapter claimed in one of claims 1 to 13, comprising the following steps:
providing the ferrule guide (12) and the adapter body (11),
providing the first fiber optic ferrule (13) terminating at least one optical fiber;
fixing the first fiber optic ferrule (13) permanently in the ferrule guide (12) from the first side (15) of the ferrule guide (12).
